# EUROPEAN PATENT APPLICATION

(11) **EP 4 541 653 A1**
(43) Date of publication of application: **23.04.2025**
(21) Application number: 23869876.5
(22) Date of filing: 30.06.2023
(51) Int. Cl.: B60N 2/62, B60N 2/68

(54) **VEHICLE SEAT AND VEHICLE HAVING SAME**

(30) Priority: 26.09.2022 CN 202222547958 U
(71) Applicant: Nio Technology (Anhui) Co., Ltd, Hefei City, Anhui 230601 (CN)
(72) Inventor: CAI, Jie, Shanghai 201804 (CN); XU, Zhiqiang, Shanghai 201804 (CN); WANG, Qiong, Shanghai 201804 (CN); WANG, Zheng, Shanghai 201804 (CN)
(74) Representative: Vossius & Partner Patentanwälte Rechtsanwälte mbB
(86) International application number: PCT/CN2023/105205
(87) International publication number: WO 2024/066628

(57) **Abstract**

The invention relates to a vehicle seat and a vehicle having the vehicle seat. The vehicle seat includes: a seat pan mounting bracket having opposite front and rear portions; a seat pan having a fixed end rotatably fixed to the rear portion and a movable end opposite the fixed end; a connecting bracket fixedly connected to the movable end and on which a locking part is provided; and a locking mechanism arranged on the front portion and capable of forming a releasable locking connection with the locking part for constraining the movable end on the front portion. In the vehicle seat, the seat pan can be easily removed and mounted by means of the fit between the locking part and the locking mechanism, thereby optimizing an assembly process and saving assembly and machining costs.

## Description

### REFERENCE TO PRIORITY APPLICATION

The present application claims priority to the Chinese Utility Model Patent No. 202222547958.5 filed on September 26, 2022, the contents of which are incorporated herein by reference in its entirety.

### Technical Field

The invention relates to the technical field of vehicles, and in particular to a vehicle seat and a vehicle having the vehicle seat.

### Technical Background

The vehicle seat is a seat for a driver or a passenger in a vehicle, can provide a comfortable and safe seat for the driver or the passenger, and is one of important parts of the vehicle.

Currently, a vehicle seat generally includes components such as a seat pan (or "cushion"), a backrest, a headrest and an armrest. The seat pan is the core component of the vehicle seat, and can provide a powerful support for the driver or the passenger to sit in the seat. In order to improve the comfort of the vehicle seat, components such as shock absorbers, front and rear position adjustment mechanisms and upper and lower angle adjustment mechanisms are usually provided below the seat pan, resulting in a limited space below the seat pan, such that it is extremely inconvenient to install and remove the seat pan.

Therefore, a new technical solution is needed in the art to solve the above problem.

### SUMMARY

In order to solve the technical problem in the prior art of inconveniences in removing and mounting a seat pan of a vehicle seat, the invention provides a vehicle seat. The vehicle seat includes: a seat pan mounting bracket having opposite front and rear portions; a seat pan having a fixed end rotatably fixed to the rear portion and a movable end opposite the fixed end; a connecting bracket fixedly connected to the movable end and on which a locking part is provided; and a locking mechanism arranged on the front portion and capable of forming a releasable locking connection with the locking part for constraining the movable end on the front portion.

In the vehicle seat of the invention, the vehicle seat includes a seat pan mounting bracket, a seat pan, a connecting bracket, and a locking mechanism. The seat pan mounting bracket has opposite front and rear portions. The seat pan has a fixed end and a movable end opposite each other. The fixed end is rotatably fixed to the rear portion of the seat pan mounting bracket such that the seat pan can be rotated relative to the seat pan mounting bracket to improve the comfort of the seat pan. The connecting bracket is fixedly connected to the movable end, a locking part is provided on the connecting bracket, and the locking mechanism that fits with the locking part is arranged on the front portion of the seat pan mounting bracket, such that the movable end of the seat pan can be easily removed from and mounted on the front portion of the seat pan mounting bracket by means of the fit between the locking part and the locking mechanism. In particular, when the locking part fits with the locking mechanism to form a locked connection, the movable end of the seat pan is constrained at the front portion of the seat pan mounting bracket, forming a stable fixed connection to complete assembly; and when the locking part is released from the locking mechanism, the movable end of the seat pan may be easily separated from the front portion of the seat pan mounting bracket to complete removal. With the configuration described above, easy removal and mounting of the seat pan on the seat pan mounting bracket is possible, thereby improving an assembly process and reducing assembly and manufacturing costs.

In a preferred technical solution of the vehicle seat as described above, the locking mechanism includes: a base frame arranged on the front portion and formed with a locking groove to receive the locking part; and a bolt retractably fixed to the base frame, the bolt being configured to extend into the locking groove to lock the locking part and exit the locking groove to unlock the locking part. The base frame is provided to provide mounting space for the other components of the locking mechanism. The locking groove is arranged on the base frame and the bolt is retractably fixed on the base frame such that when the locking part is inserted into the locking groove, the bolt is controlled to enter the locking groove to stop the locking part for locking the locking part, and the bolt is controlled to exit the locking groove to release the containment on the locking part for unlocking locking part.

In a preferred technical solution of the vehicle seat described above, an elastic U-shaped limiter is provided on the base frame, and the U-shaped limiter defines the locking groove opening toward the locking part. With the above configuration, when the locking part is inserted into the locking groove, the elastic effect of the U-shaped limiter itself can be used to form a flexible connection, avoiding frictions and noises between the components.

In a preferred technical solution of the vehicle seat described above, the base frame includes a base plate, first and second side plates extending vertically upwardly from two sides of the base plate respectively, a first engaging opening formed in the first side plate, and a second engaging opening opposite the first engaging opening and formed in the second side plate; and the U-shaped limiter includes a limiter body and first and second engaging grooves extending vertically downwardly from two ends of the limiter body, where each of the first engaging groove and the second engaging groove is insertable into a corresponding one of the first engaging opening and the second engaging opening. With the above configuration, the U-shaped limiter can be easily engaged to the base frame, further improving the efficiency of removal and mounting.

In a preferred technical solution of the vehicle seat described above, a first vertical wall and a second vertical wall that are on one side of the U-shaped limiter and spaced apart from each other are formed on the base plate, a first limiting hole is formed in the first vertical wall, a second limiting hole opposite the first limiting hole is formed in the second vertical wall, and the bolt is retractably fixed in the first limiting hole and the second limiting hole. With the above configuration, the direction in which the bolt is retracted and extends can be defined such that the bolt can easily enter or exit the locking groove.

In a preferred technical solution of the vehicle seat described above, the bolt includes a locking section, a connecting section and a limiting section that are connected in sequence, the connecting section extending through the second limiting hole, the locking section being positioned on a side of the second vertical wall close to the first vertical wall and capable of extending through the first limiting hole to enter or exit the locking groove, and the limiting section being positioned on a side of the second vertical wall away from the first vertical wall, where the locking section and the limiting section have first and second limiting surfaces opposite each other, respectively, and an area on each of the first limiting surface and the second limiting surface is larger than an area of the second limiting hole. With the above configuration, the entire bolt has a simple structure. In addition, the area of each of the first limiting surface and the second limiting surface is set to be larger than the area of the second limiting hole, such that the position of the bolt when extending or being retracted can be easily constrained.

In a preferred technical solution of the vehicle seat described above, a return spring is sleeved on the connecting section, the return spring having a first end fixed to the locking section and a second end fixed to the second vertical wall. The return spring is provided such that the bolt can automatically return under the elastic effect of the return spring itself.

In a preferred technical solution of the vehicle seat described above, a third vertical wall facing toward the second vertical wall and remote from the first vertical wall is further provided on the base plate, a handle is provided on the third vertical wall, and a connector is provided between the handle and the limiting section, such that the bolt is controlled to exit the locking groove by gripping the handle and exerting an external force on the handle. With the above configuration, it is easy to exert an external force on the bolt by gripping the handle, so as to control the bolt to exit the locking groove for unlocking the locking part.

In a preferred technical solution of the vehicle seat described above, the locking part includes a horizontal section that is capable of abutting within the locking groove, vertical sections extending vertically upwardly from two ends of the horizontal section, and diagonal sections respectively extending outwardly from ends of the vertical sections away from the horizontal section and capable of being fixed to the connecting bracket. With the above configuration, the locking part has a simple structure and is easily machined.

In a preferred technical solution of the vehicle seat described above, a first rotating shaft and a second rotating shaft opposite and coaxial with each other are provided on the rear portion, and a first bearing that is capable of receiving the first rotating shaft and a second bearing that is capable of receiving the second rotating shaft are provided on the fixed end, where the first bearing and the second bearing each have a U-shaped groove opening rearwards. The first rotating shaft and the second rotating shaft are fitted with corresponding first and second bearings such that it can be easy for the fixed end of the seat pan to be rotatably connected to the seat pan mounting bracket. In addition, that first bearing and second bearing are configured to each have a U-shaped groove opening rearwards such that the first and second rotating shafts can be easily inserted into the corresponding first and second bearings to improve assembly efficiency.

In a preferred technical solution of the vehicle seat described above, the fixed end is detachably fixed to the rear portion. The fixed end being detachably fixed to the rear portion of the seat pan mounting bracket may further facilitate the removal and mounting of the seat pan.

In a preferred technical solution of the vehicle seat described above, the vehicle seat further includes a leg rest, the leg rest fixedly connected to the seat pan by virtue of the connecting bracket. The leg rest is provided to provide support for legs of a user so as to improve sitting comfort. In addition, the leg rest is fixedly connected to the seat pan by virtue of the connecting bracket, such that the leg rest can be removed or mounted simultaneously when the seat pan is removed or mounted, improving the efficiency of removal and mounting. Further, The leg rest and the seat pan are form as an one-piece structure, which can also prevent the creation of a visible gap between the leg rest and the seat pan when they are adjusted, which otherwise affects aesthetics.

In order to solve the technical problem of the prior art inconvenience in removing and installing the seat pan of the vehicle seat, the invention provides a vehicle. The vehicle includes a vehicle seat according to any one of the above technical solutions. By using the vehicle seat according to any one of the above technical solutions, in the vehicle of the invention, the seat pan can be easily removed and mounted by means of the fit between the locking part and the locking mechanism, thereby optimizing an assembly process and saving assembly and machining costs.

### Brief Description of the Drawings

Preferred implementations of the invention are described below with reference to the accompanying drawings, in which:
FIG. 1 is a schematic front view of the structure of an embodiment of a vehicle seat according to the invention;
FIG. 2 is a schematic back view of the structure of an embodiment of a vehicle seat according to the invention;
FIG. 3 is a schematic diagram of the structure of an embodiment of a vehicle seat according to the invention, with a seat pan removed;
FIG. 4 is a schematic diagram of the structure of an angle adjustment mechanism of a vehicle seat according to the invention;
FIG. 5 is a schematic diagram of the structure of an embodiment of a connecting bracket, a locking part and a locking mechanism of a vehicle seat according to the invention;
FIG. 6 is a schematic diagram of the structure of an embodiment of the connecting bracket of the vehicle seat according to the invention;
FIG. 7 is a schematic diagram of the structure of an embodiment of the locking part of the vehicle seat according to the invention;
FIG. 8 is a schematic diagram of the structure of an embodiment of the locking mechanism of the vehicle seat according to the invention;
FIG. 9 is a schematic diagram of the structure of a base frame of the locking mechanism of the vehicle seat according to the invention;
FIG. 10 is a schematic diagram of the structure of an embodiment of a U-shaped limiter of the locking mechanism of the vehicle seat according to the invention; and
FIG. 11 is a schematic diagram of the structure of an embodiment of a bolt of the locking mechanism of the vehicle seat according to the invention.

### List of reference signs:

1. Vehicle seat; 10. Seat pan mounting bracket; 10a. Rear portion; 10b. Front portion; 11a. First bracket; 11b. Second bracket; 111a. First rotating shaft; 111b. Second rotating shaft; 12. First connecting pipe; 13a. First primary link; 13b. Second primary link; 14a. First secondary link; 14b. Second secondary link; 15. Second connecting pipe; 20. Seat pan; 20a. Fixed end; 20b. Movable end; 21. Seat pan body; 211a. First mounting recess; 211b. Second mounting recess; 2111. First fastener; 212a. First bearing; 212b. Second bearing; 22. Circumferential wall; 30. Connecting bracket; 31. Horizontal plate; 311. First fastening hole; 312. Reinforcing groove; 313. Through hole; 32. Vertical plate; 321. Second fastening hole; 322. Positioning slot; 33. Flange; 40. Locking part; 41. Horizontal section; 42. Vertical section; 43. Diagonal section; 50. Locking mechanism; 51. Base frame; 511. Base plate; 5111. Protrusion; 512. First side plate; 5121. First engaging opening; 51211. First limiting notch; 5122. First pipe groove; 513. Second side plate; 5131. Second engaging opening; 51311. Second limiting notch; 5132. Second pipe groove; 514. Third vertical wall; 5141. Handle limiting slot; 5142. Second buffer spacer; 52. Mounting bracket; 521. Bottom wall; 5211. Second fastener; 522. First vertical wall; 5221. First limiting hole; 523. Second vertical wall; 5231. Second limiting hole; 53. Bolt; 531. Locking section; 5311. Guide slope; 5312. First flat limiting surface; 532. Connecting section; 533. Limiting section; 5331. Second flat limiting surface; 54. U-shaped limiter; 541. Limiter body; 5411. First engaging groove; 54111. First limiting protrusion; 5412. Second engaging groove; 54121. Second limiting protrusion; 5413. First limiting tab; 5414. Second limiting tab; 542. Locking groove; 55. Return spring; 54a. First end; 54b. Second end; 56. Connector; 57. Handle; 60. Angle adjustment mechanism; 61. Drive device; 62. Gear; 63. Toothed plate; 64. Mounting plate; 70. Leg rest; 71. Leg rest body; 72. Positioning protrusion.

### Detailed Description of Embodiments

The preferred implementations of the invention are described below with reference to the accompanying drawings. It should be understood by those skilled in the art that these implementations are only for explaining the technical principles of the invention and are not intended to limit the scope of protection of the invention.

It should be noted that, in the description of the invention, the terms that indicate the direction or positional relationship, such as "upper", "lower", "left", "right", "inner", and "outer", are based on the direction or positional relationship shown in the figures, which is merely for ease of description instead of indicating or implying that the device or element must have a particular orientation and be constructed and operated in a particular orientation, and therefore should not be construed as limiting the invention. In addition, the terms "first" and "second" are used for descriptive purposes only, and cannot be construed as indicating or implying relative importance.

In addition, it should also be noted that, in the description of the invention, the terms "mount", "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the invention can be interpreted according to the specific situation.

In order to solve the technical problem in the prior art of inconveniences in removing and installing a seat pan of a vehicle seat, the invention provides a vehicle seat 1. The vehicle seat 1 includes: a seat pan mounting bracket 10 having a front portion 10a and a rear portion 10b that are opposite each other; a seat pan 20 having a fixed end 20a rotatably fixed to the rear portion 10a and a movable end 20b opposite the fixed end 20a; a connecting bracket 30 fixedly connected to the movable end 20b, a locking part 40 being provided on the connecting bracket 30; and a locking mechanism 50 arranged on the front portion 10b and in releasable locking connection with the locking part 40 to constrain the movable end 20b on the front portion 10b.

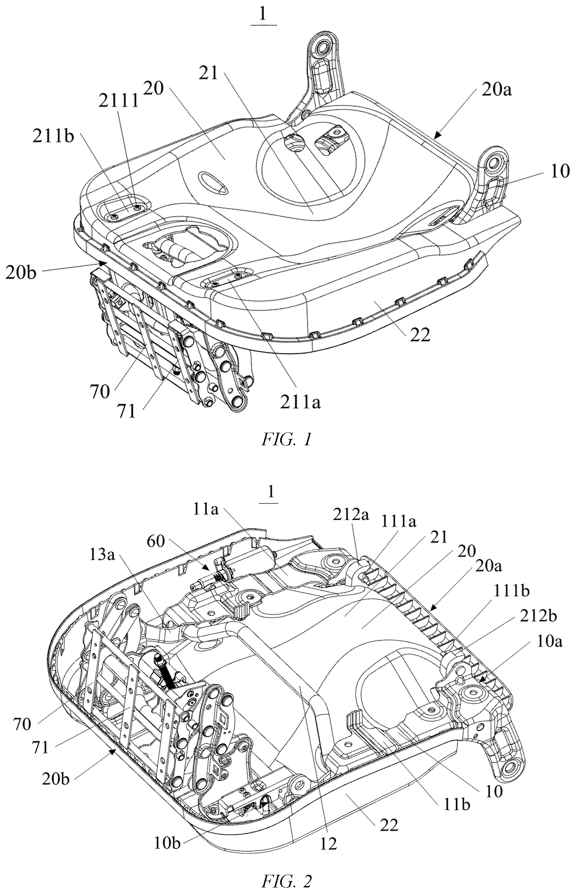

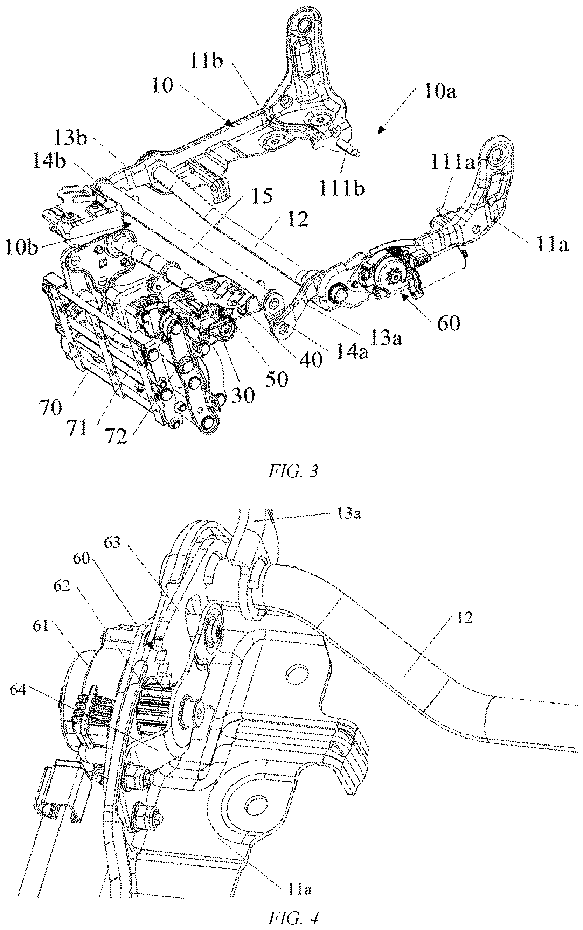

FIG. 1 is a schematic front view of the structure of an embodiment of a vehicle seat according to the invention; FIG. 2 is a schematic back view of the structure of an embodiment of a vehicle seat according to the invention; and FIG. 3 is a schematic diagram of the structure of an embodiment of a vehicle seat according to the invention, with a seat pan removed. As shown in FIGS. 1-3, in one or more embodiments, the vehicle seat 1 of the invention includes a seat pan mounting bracket 10, a seat pan 20, a connecting bracket 30, a locking part 40 fixed to the connecting bracket 30, and a locking mechanism 50, and the like. In one or more alternative embodiments, the vehicle seat 1 further includes an angle adjustment mechanism 60 arranged on the seat pan mounting bracket 10 to flexibly adjust the angle between the seat pan 20 and the seat pan mounting bracket 10 so as to improve the comfort of the vehicle seat 1. In one or more alternative embodiments, the vehicle seat 1 further includes a leg rest 70 fixed to the seat pan 20. The leg rest 70 has a retractable leg rest body 71 to provide a user with flexibility in leg support, further improving the comfort of the vehicle seat 1.

As shown in FIGS. 1 and 2, the seat pan 20 has a fixed end 20a and a movable end 20b that are opposite each other. Based on the orientation as shown in FIGS. 1 and 2, the fixed end 20a is a rear end of the seat pan 20 and the movable end 20b is a front end of the seat pan 20. The seat pan 20 includes a generally rectangular seat pan body 21 and a circumferential wall 22 extending vertically downwardly from a circumferential edge of the seat pan body 21. The seat pan body 21 provides a stable and comfortable support for the user's hips, reducing the fatigue of a driver or a passenger. The arrangement of the circumferential wall 22 not only increases the rigidity and strength of the entire seat pan 20, but also functions to shield and protect the components below the seat pan 20. The seat pan body 21 and the circumferential wall 22 can be integrally formed of a suitable metal material (such as stainless steel), by a stamping process to simplify the process.

With continued reference to FIG. 1, a first mounting recess 211a and a second mounting recess 211b that are spaced apart in a left-right direction are formed in the seat pan body 21 close to the movable end 20. Each of the first mounting recess 211a and the second mounting recess 211b is configured to extend vertically downward from the seat pan body 21. Two fastening holes (not shown) are provided spaced from each other in each of the first mounting recess 211a and the second mounting recess 211b. Each fastening hole may match with a corresponding first fastener 2111 such that the seat pan body 21 forms a detachable fixed connection with the connecting bracket 30, and the movable end 20b of the seat pan 20 is thus easily constrained on the seat pan mounting bracket 10 by forming a removable locking connection between the locking part 40 fixed on the connecting bracket 30 and the locking mechanism 50 fixed on the seat pan mounting bracket 10, so as to improve the efficiency of removal and mounting of the seat pan 20. The first fastener 2111 includes, but is not limited to, a stud, a nut, etc. Alternatively, the number of the fastening holes may also be set a different suitable number greater than or less than 2, such as 1, 3, etc.

With continued reference to FIG. 2, a first bearing 212a and a second bearing 212b spaced apart from each other in a left-right direction are formed on a back surface of the seat pan body 21 close to the fixed end 20a. The first bearing 212a may receive a first rotating shaft 111a on the seat pan mounting bracket 10, and the second bearing 212b may receive a second rotating shaft 111b on the seat pan mounting bracket 10. In one or more embodiments, the first bearing 212a and the second bearing 212b are U-shaped slots that open rearwards such that the first rotating shaft 111a and the second rotating shaft 111b can be easily inserted into the first bearing 212a and the second bearing 212b, and that a detachable connection is formed between the fixed end 20a of the seat pan and the rear portion 10a of the seat pan mounting bracket 10, so as to further improve the efficiency of removal and mounting of the seat pan 20.

As shown in FIGS. 3, in one or more embodiments, the seat pan mounting bracket 10 has a rear portion 10b and a front portion 10a that are opposite each other. Based on the orientation as shown in FIG. 3, the rear portion 10a is located behind the entire seat pan mounting bracket 10, and the front portion 10b is located in front of the entire seat pan mounting bracket 10. In one or more embodiments, the front portion 10b of the seat pan mounting bracket 10 is rotatable relative to the rear portion 10a to rotate the seat pan 20 relative to the rear portion 10a by the front portion 10b under the control of the angle adjustment mechanism 60 so as to adjust the angle of the seat pan 20. Alternatively, the seat pan mounting bracket 10 may be provided as an integral fixed frame, i.e., no relative rotation is possible between the front portion 10b and rear portion 10a.

With continued reference to FIG. 3, in one or more embodiments, the seat pan mounting bracket 10 includes a first bracket 11a and a second bracket 11a that are symmetrical from side to side. The first bracket 11a and the second bracket 11a can be machined from a suitable metal material (e.g., stainless steel, etc.) by a stamping process to provide good rigidity and strength. A first rotating shaft 111a and a second rotating shaft 111b opposite each other are formed on the first bracket 11a and the second bracket 11a near the rear portion 10a. An axis of rotation of the first rotating shaft 111a coincides with an axis of rotation of the second rotating shaft 111b, that is, the first rotating shaft 111a is coaxial with the second rotating shaft 111b. The first rotating shaft 111a is rotatably fixed in the first bearing 212a of the seat pan 20, and the second rotating shaft 111b is rotatably fixed in the second bearing 212b of the seat pan 20 (see FIG. 2), which allows the fixed end 20a of the seat pan 20 to easily form a rotatable fixed connection with the rear portion 10a of the seat pan mounting bracket 10.

With continued reference to FIG. 3, in one or more embodiments, a first connecting pipe 12 is formed between the first bracket 11a and the second bracket 11a and close to the front portion 10b. The first connecting pipe 12 may be machined from a suitable metal material, such as stainless steel, to enable the first connecting pipe to have a good mechanical strength and light weight. In one or more embodiments, the first connecting pipe 12 is rotatably fixed between the first bracket 11a and the second bracket 11a to cooperate with the angle adjustment mechanism 60 to control the rotation of the seat pan 20 by an angle relative to the seat pan mounting bracket 10, so as improve the user's comfort.

With continued reference to FIG. 3, in one or more embodiments, a first primary link 13a and a second primary link 13b are provided at twos ends of the first connecting pipe 12, respectively. The first primary link 13a and the second primary link 13b can be machined from a suitable metal material (e.g., stainless steel, etc.) by a stamping process. Each of the first primary link 13a and the second primary link 13b is fixed to the first connecting pipe 12. A fixing method includes, but is not limited to, welding. A first secondary link 14a is provided at an end of the first primary link 13a away from the first connecting pipe 12. A pivoting connection is formed between the first secondary link 14a and the first primary link 13a. Accordingly, a second secondary link 14b is provided at an end of the second primary link 13b away from the first connecting pipe 12. A pivoting connection is also formed between the second secondary link 14b and the second primary link 13b. The first secondary link 14a and the second secondary link 14b may also be machined from a suitable metal material (e.g., stainless steel, etc.) by a stamping process. A second connecting pipe 15 is also provided between the first secondary link 14a and the second secondary link 14b. In particular, An end of the first secondary link 14a away from the first primary link 13a is fixed at a right end of the second connecting pipe 15 (based on the orientation as shown in FIG. 3), and an end of the second secondary link 14b away from the second primary link 14a is fixed to a left end of the second connecting pipe 15 (based on the orientation as shown in FIG. 3). The second connecting pipe 15 may be machined from a suitable metal material, such as stainless steel, to enable the first connecting pipe to have a good mechanical strength and light weight. At the left and right ends of the second connecting pipe 15 provided are two connecting brackets 30 symmetrical to each other. Each connecting bracket 30 is connected to the movable end 20b of the seat pan 20, so that the movable end 20b of the seat pan 20 can be easily rotated about the fixed end 20a under the control of the angle adjustment mechanism 60.

As shown in FIG. 3, in one or more embodiments, the angle adjustment mechanism 60 is arranged on a right side of the seat pan mounting bracket 10 (based on the orientation as shown in FIG. 3). Alternatively, the angle adjustment mechanism 60 is arranged on a left side of the seat pan mounting bracket 10. FIG. 4 is a schematic diagram of the structure of the angle adjustment mechanism of the vehicle seat the according to the invention. As shown in FIGS. 4, in one or more embodiments, the angle adjustment mechanism 60 includes a drive device 61, a gear 62, a toothed plate 63, a mounting plate 64, and the like. The drive device 61 is fixed to the first bracket 11a of the seat pan mounting bracket 10. The drive device 61 may be, but is not limited to, a stepping motor, a servo motor, or the like. The drive device 61 may be in communication connection with a control system (not shown) of a predetermined apparatus (such as a vehicle), so that the switch-on and switch-off of the drive device 61 can be easily controlled by the control system. An output shaft of the drive device 61 is fixedly connected to the gear 62 to drive the gear 62 to rotate. The gear 62 meshes with a toothed portion (not shown) of the toothed plate 63, which in turn drives the toothed plate 63 to rotate together. An end of the toothed plate 63 away from the gear 62 is arranged around the first connecting pipe 12 and is fixedly connected to the first connecting pipe. A fixing method includes, but is not limited to, welding. The mounting plate 64 is fixed to the first bracket 11a and provides mounting support for the gear 62, thereby providing structural stability. With the arrangement described above, when the drive device 61 is switched on under the control of the control system, the gear 62 rotates to cause the toothed plate 63 to rotate together. At the same time, the first connecting pipe 12 is also rotated together by the toothed plate 63, so that the first primary link 13a and the second primary link 13b fixed to the first connecting pipe 12 cause corresponding first and second secondary links 14a, 14b to rotate, respectively. The second connecting pipe 15 fixed to the first secondary link 14a and the second secondary link 14b is lifted or lowered by the links, so as to adjust the angle of the seat pan 20 relative to the rear portion 10a of the seat pan mounting bracket 10.

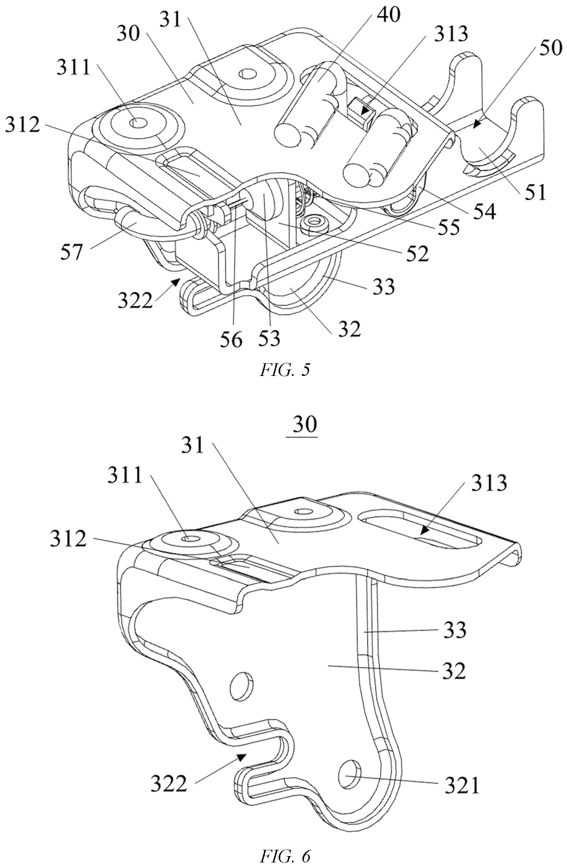

FIG. 5 is a schematic diagram of the structure of an embodiment of a connecting bracket, a locking part and a locking mechanism of a vehicle seat according to the invention; FIG. 6 is a schematic diagram of the structure of an embodiment of the connecting bracket of the vehicle seat according to the invention. As shown in FIGS. 5 and 6, in one or more embodiments, the connecting bracket 30 includes a horizontal plate 31 extending generally in a horizontal direction and a vertical plate 32 extending substantially in a vertical direction. Based on the orientation as shown in FIG. 6, the vertical plate 32 is located on a left side of the horizontal plate 31. The horizontal plate 31 and the vertical plate 32 may be integrally formed of a suitable resin (e.g., ABS, PP, etc.) material by a stamping process to simplify a manufacturing process. In one or more embodiments, a flange 33 extending perpendicularly toward the interior of the connecting bracket 30 is also formed at the circumferential edges of the horizontal plate 31 and the vertical plate 32 to enhance the rigidity and strength of the entire connecting bracket 30 and extend the service life. Two first fastening holes 311 spaced from each other are provided in the horizontal plate 31. Each first fastening hole 311 may be opposite a fastening hole in the seat pan 20 and is fixedly connected to the fastening hole by a first fastener 2111. Alternatively, the number of the first fastening holes 311 may be set to be a different number greater or less than 2. In one or more embodiments, a reinforcing groove 312 that extends vertically downward is also provided on the horizontal plate 31 to enhance the rigidity and strength of the horizontal plate 31. In one or more embodiments, a generally rectangular through hole 313 is also provided in the horizontal plate 31 to allow the locking part 40 to pass therethrough to fit with the locking mechanism 50. Alternatively, the through hole 313 may also be configured in an oval shape, a square shape or another suitable shape.

With continued reference to FIG. 6, in one or more embodiments, two second fastening holes 321 spaced apart from each other are provided in the vertical plate 32. Each second fastening hole 321 may be fitted with a suitable fastener, including but not limited to a stud, a nut, etc., so that the connecting bracket 30 may easily form a removable fixed connection with the leg rest 70. Alternatively, the number of the second fastening holes 321 may be set to be a different number greater or less than 2. In one or more embodiments, a positioning slot 322 opening to the left (based on the orientation as shown in FIG. 6) is provided in vertical plate 32. This positioning slot 322 can be fitted with positioning protrusion 72 on the leg rest 70 to further improve the assembly efficiency.

As shown in FIG. 5, the locking part 40 is fixed to the connecting plate 30 and extends through the through hole 313 in the connecting bracket 30 to fit with the locking mechanism 50 located below the horizontal plate 31. The locking part 40 may be made of a suitable metal material such as stainless steel, to impart the locking part a good mechanical property. The locking part 40 is fixed to the connecting bracket 30 by a method including, but not limited to welding.

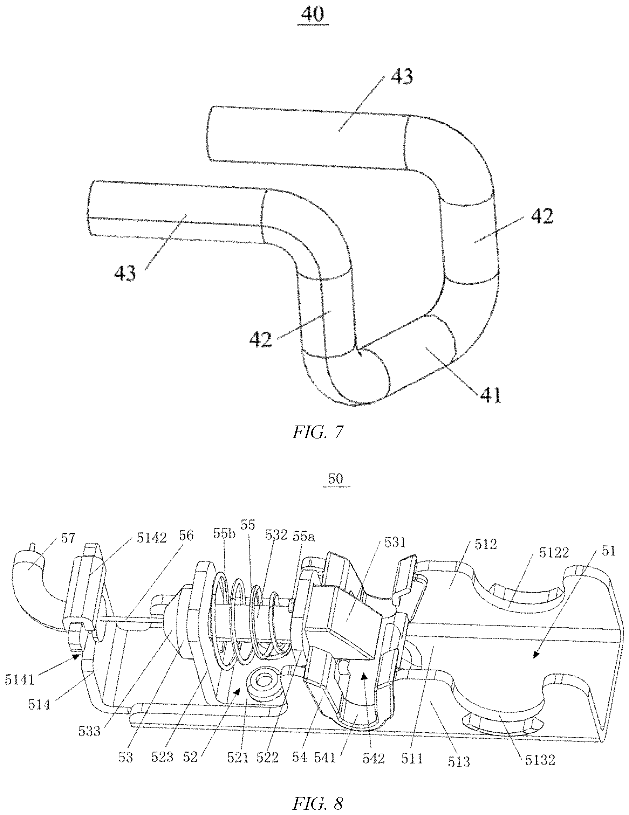

FIG. 7 is a schematic diagram of the structure of an embodiment of the locking part of the vehicle seat according to the invention. As shown in FIG. 7, in one or more embodiments, the locking part 40 includes a horizontal section 41 extending generally in a horizontal direction, vertical sections 42 extending vertically upwardly from both ends of the horizontal section 41, respectively, and diagonal sections 43 extending from the ends of the vertical sections 42 away from the horizontal section 41 in a direction generally perpendicular to the vertical sections 42. The horizontal section 41, the vertical sections 42 and the diagonal sections 43 each have a generally circular cross section. The diagonal sections 43 are fixed to the horizontal plate 31 of the connecting bracket 30. The vertical sections 42 extend through the through hole 313 such that the horizontal section 41 between the two vertical sections 42 is positioned below the horizontal plate 31 so as to fit with the locking mechanism 50. By means of the above configuration, the locking part 40 has a simple and stable construction, which is easy to machine and ensures the reliability of the fit between the locking part 40 and the locking mechanism 50.

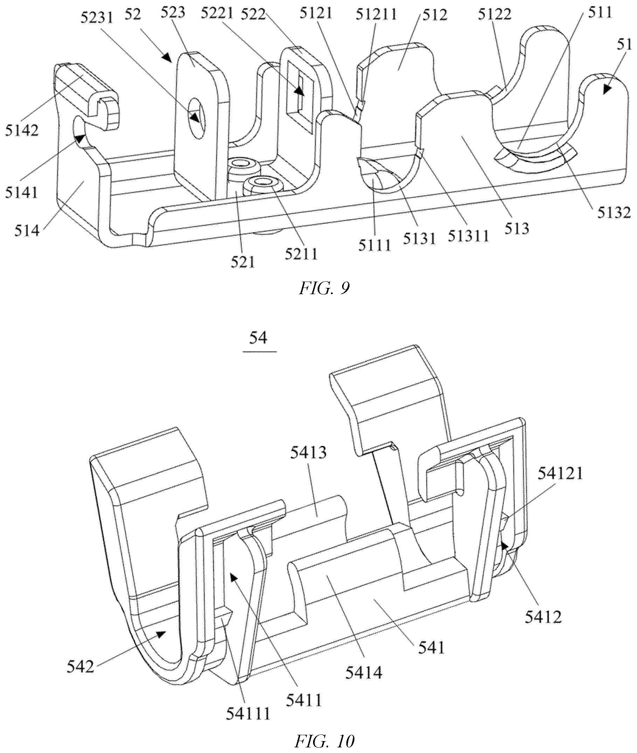

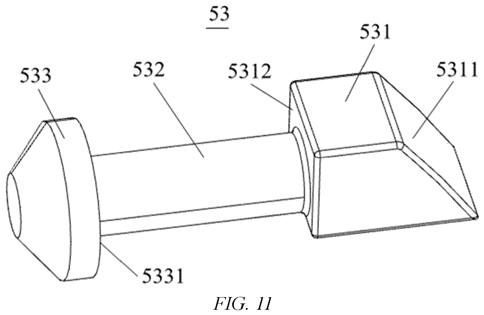

FIG. 8 is a schematic diagram of the structure of an embodiment of the locking mechanism of the vehicle seat according to the invention; FIG. 9 is a schematic diagram of the structure of a base frame of the locking mechanism of the vehicle seat according to the invention; FIG. 10 is a schematic diagram of the structure of an embodiment of a U-shaped limiter of the locking mechanism of the vehicle seat according to the invention; and FIG. 11 is a schematic diagram of the structure of an embodiment of a bolt of the locking mechanism of the vehicle seat according to the invention. As shown in FIGS. 8-11, in one or more embodiments, the locking mechanism 50 includes a base frame 51, a mounting bracket 52, a bolt 53, a U-shaped limiter 54, a return spring 55, a connector 56, a handle 57, and the like. Alternatively, the locking mechanism 50 may be of another suitable construction so long as it can be fitted with the locking part 40 to form a removable locking connection, for example, only the base frame 51, the bolt 53 retractablely fixed to the base frame 51 and the like are included.

As shown in FIGS. 8 and 9, in one or more embodiments, the base frame 51 includes a base plate 511, a first side plate 512, a second side plate 513, and a third vertical wall 514. The base frame 51 can be machined from a suitable metal material (such as stainless steel, etc.) to obtain a good mechanical property. The base plate 511 has a generally rectangular shape. In one or more embodiments, a vertically upwardly extending protrusion 5111 is provided on the base plate 511, such that the rigidity and strength of the base plate 511 are increased and the U-shaped limiter 54 against the base plate is effectively supported, so as to improve the stability of the structure.

With continued reference to FIG. 9, the first side plate 512 and the second side plate 513 are arranged on front and rear sides of the base plate 511 (based on the orientation as shown in FIG. 9), respectively, and extend generally upwardly in a direction perpendicular to the base plate 511. A first engaging opening 5121 opening upwardly is formed in the first side plate 512 near the middle to receive a first engaging groove 5411 of the U-shaped limiter 54. In one or more embodiments, two first limiting notches 51211 opposite each other are further provided in the first engaging opening 5121 to receive corresponding first limiting protrusions 54111 in the first engaging groove 5411, so as to enhance the reliability of the connection between the first engaging groove 5411 and the first engaging opening 5121. Accordingly, a second engaging opening 5131 opposite the first engaging opening 5121 is formed in the second side plate 513. The second engaging opening 5131 opens upwardly to receive a second engaging groove 5412 of the U-shaped limiter 54. In one or more embodiments, two second limiting notches 51311 opposite each other are further provided in the second engaging opening 5131 to receive corresponding second limiting protrusions 54121 in the second engaging groove 5412. In addition, a first pipe groove 5122 and a second pipe groove 5132 that are opposite each other and open upwardly are provided on the right sides of the first side plate 512 and the second side plate 513, respectively, to receive the second connecting pipe 15 so as to form a fixed connection between the second connecting pipe 15 and the base frame 51. A fixing method includes, but is not limited to, welding.

With continued reference to FIG. 9 and based on the orientation as shown in FIG. 9, the third vertical wall 514 extends upwardly from a left edge of the base plate 511 in a direction generally perpendicular to the base plate 511. A handle limiting slot 5141 that opens forwards is formed in the third vertical wall 514 to define a position of the handle 57. Alternatively, the handle limiting slot 5141 may be configured to open rearwards. In one or more embodiments, a buffer spacer 5142 is engaged on a top edge of the third vertical wall 514. The buffer spacer 5142 can be machined from a suitable elastic material such as rubber, so that the connecting bracket 30 abuts against the base frame 51 to form a flexible connection, preventing component wear and noises.

As shown in FIGS. 8 and 10, in one or more embodiments, the U-shaped limiter 54 includes a limiter body 541. The limiter body 541 is machined from a suitable elastic material such as rubber, to impart the limiter body a good elasticity. The limiter body 541 defines a locking groove 542 that opens upwardly for receiving the locking part 40. The elastic U-shaped limiter 54 enables flexible connection with the locking part 40 when the locking part abuts against the limiter, which prevents component wear and noises. The first engaging groove 5411 and the second engaging groove 5412 extending vertically downwardly are formed at left and right ends of the limiter body 541 (based on the orientation as shown in FIG. 10), respectively. The first engaging groove 5411 can be engaged in a corresponding first engaging opening 5121 of the base frame 51, and the second engaging groove 5412 can be engaged in a corresponding second engaging opening 5131 of the base frame 51, so that the U-shaped limiter 54 can be easily engaged to the base frame 51. In one or more embodiments, two first limiting protrusions 54111 spaced apart from each other are provided in the first engaging groove 5411, and two second limiting protrusions 54121 spaced apart from each other stop protrusion in the second engaging groove 5412. Each first limiting protrusion 54111 may be engaged into a corresponding first limiting notch 51211 of the first engaging opening 5121, and each second limiting protrusion 54121 may be engaged into a corresponding second limiting notch 51311 of the second engaging opening 5131, so as to further improve the stability and reliability of the engagement between the U-shaped limiter 54 and the base frame 51. In one or more embodiments, a first limiting tab 5413 and a second limiting tab 5414 opposite each other are further provided on the limiter body 541 near the middle. Each of the first limiting tab 5413 and the second limiting tab 5414 has a substantially arcuate shape such that when the horizontal section 41 of the locking part 40 is inserted into the locking groove 542, the first limiting tab 5413 and the second limiting tab 5414 can wrap up the horizontal section 41, which improves the reliability of constraining the horizontal section 41 and prevents the locking part 40 from swaying in the locking groove 542.

It is note that in one or more alternative embodiment, the locking mechanism 50 of the vehicle seat 1 of the invention may also be provided with no U-shaped limiter 54. In other words, the locking groove 542 is not defined by the U-shaped limiter 54, and is defined directly by the first engaging opening 5121 and the second engaging opening 5131 formed on the base frame 51.

As shown in FIG. 8, the mounting bracket 52 is fixed to the base plate 511 of the base frame 51 and is positioned adjacent to the protrusion 5111. In one or more embodiments, the mounting bracket 52 includes a bottom wall 521, a first vertical wall 522, and a second vertical wall 523. The bottom wall 521, the first vertical wall 522 and the second vertical wall 523 may be machined from a suitable metal material (such as stainless steel, etc.). The bottom wall 521 has a generally rectangular shape. Two fastening holes (not shown) spaced from each other are provided in the bottom wall 521. Each fastening hole may be fitted with a corresponding second fastener 5211 such that the bottom wall 521 may be detachably fixed to the base plate 511 of the base frame 51. Alternatively, the number of the fastening holes may be set to be a different number greater or less than 2. The first vertical wall 522 and the second vertical wall 523 extend vertically upwardly from the left and right sides of the bottom wall 521, respectively. The first vertical wall 522 is positioned close to the protrusion 5111, the first engaging opening 5121 and the second engaging opening 5131, and the second vertical wall 523 is positioned remote from the protrusion 5111, the first engaging opening 5121 and the second engaging opening 5131. A first limiting hole 5221 of a generally square shape is provided in the first vertical wall 522, so that a locking section 531 of the bolt 53 can pass the first limiting hole to fit with the locking part 40 inserted into the locking groove 542. Alternatively, the first limiting hole 5221 may also be configured in another suitable shape, such as square, trapezoid, etc. A second limiting hole 5231 opposite the first limiting hole 5221 is provided in the second vertical wall 523. The second limiting hole 5231 has a generally circular shape to receive a connecting section 532 of the bolt 53. Alternatively, the second limiting hole 5231 may also be configured in another suitable shape, such as square, rectangle, etc. The provision of the first limiting hole 5221 and the second limiting hole 5231 allows the bolt 53 to be retractably fixed to the base frame 51 to fit with the locking part 40.

It is note that in one or more alternative embodiment, it is also possible for the locking mechanism 50 of the vehicle seat 1 of the invention to be provided with no mounting bracket 52. In other words, the first vertical wall 522 and the second vertical wall 523 are not connected to the bottom wall 521, but are formed directly on the base plate 511 of the base frame 51 by means of machining as one piece or welding, etc.

As shown in FIG. 8, the bolt 53 is retractably fixed to the base frame 51, and the bolt 53 may extend into the locking groove 542 to lock the locking part 40 and extend out of the locking groove 542 to unlock the locking part 40. As shown in FIG. 11, in one or more embodiments, the bolt 53 includes a locking section 531, a connecting section 532, and a limiting section 533. In an assembled state, the locking section 531 may pass through the first limiting hole 5221 in the first vertical wall 522 and extend into the locking groove 542 of the U-shaped limiter 54. In one or more embodiments, the locking section 531 has a vertical cross section of a generally right trapezoidal shape such that a first flat limiting surface 5312 extending generally in a vertical direction and an inclined guide slope 5311 are formed on the locking section 531. An area of the first flat limiting surface 5312 is larger than an area of the second limiting hole 5231 in the second vertical wall 523, so it is possible to prevent the locking section 531 from passing through the second limiting hole 5231 and being separated from the base frame 51, so as to ensure the stability of the structure. The provision of the guide slope 5311 not only allows the horizontal section 41 of the locking part 40 to exert a force on the bolt 53 in a direction away from the locking groove 542 when abutting against the guide slope 5311 such that the bolt 53 easily exits the locking groove 542, but also allows the locking section 531 to be easily inserted into the first limiting hole 5221.

With continued reference to FIG. 11, in one or more embodiments, the connecting section 532 is of a rod structure having a circular cross section. Alternatively, the rod structure may also be configured with a square, rectangular or another suitable cross section. Two ends of the connecting section 532 are connected to the locking section 531 and the limiting section 533, respectively. In one or more embodiments, the connecting section 532 is formed integrally with the locking section 531, and then is fixed to the limiting section 533 by means of threaded connection, engagement, etc. Alternatively, the connecting section 532 and the locking section 531 may be formed separately, and then are fixed together or connected by other suitable methods. In the assembled state, the connecting section 532 passes through the second limiting hole 5231 of the second vertical wall 523, such that a good guiding effect is provided for the bolt 53 when extending and retracting.

With continued reference to FIGS. 8 and 11, in one or more embodiments, the limiting section 533 is of a truncated cone-shaped structure with a bottom surface facing toward the locking section 531. Alternatively, the limiting section 533 may be configured as another suitable structure, such as cylinder, etc. The limiting section 533 has a second flat limiting surface 5331 facing toward the first flat limiting surface 5312. The second flat limiting surface 5331 extends generally in the vertical direction. Referring to FIG. 8, in the assembled state, the limiting section 533 is positioned on the left side of the second vertical wall 523, and the locking section 531 is positioned on the right side of the second vertical wall 523. An area of the second flat limiting surface 5331 is also larger than the area of the second limiting hole 5231 in the second vertical wall 523, preventing the limiting section 533 from passing through the second limiting hole 5231 and being separated from the base frame 51.

As shown in FIG. 8, in one or more embodiments, a return spring 55 is sleeved on the connecting section 532 of the bolt 53. The return spring 55 has a first end 55a and a second end 55b that are apposite each other. The first end 55a is fixed to the first flat limiting surface 5312 of the locking section 531 of the bolt 53, and the second end 55b is fixed to a vertical flat surface of the second vertical wall 523 that faces toward the first flat limiting surface 5312 (based on the orientation as shown in FIG. 8, i.e. the right flat surface). The return spring 55 is provided to automatically return the bolt 53, so as to cause the bolt 53 to be easily fitted with the locking part 40.

As shown in FIG. 8, in one or more embodiments, the connector 56 is connecting line. Alternatively, the connector 56 may be a connecting rope or another suitable connector. One end of the connector 56 is fixed to the limiting section 533 of the bolt 53, and the other end of the connector 56 is fixed to the handle 57.

As shown in FIG. 8, in one or more embodiments, the handle 57 has a generally L-shaped form to facilitate gripping. Alternatively, the handle 57 may also be configured in another suitable form, such as in the form of T. Based on the orientation as shown in FIG. 8, the user can exert an external force on the bolt 53 in a left direction by gripping the handle 57 to cause the bolt to move in a direction away from the locking groove 542, thereby exiting the locking groove 542. In addition, the handle 57 may be defined in the handle limiting slot 5141 of the third vertical wall 514 for ease of positioning the handle 57 by the user.

In one or more embodiments, the invention further provides a vehicle (not shown). The vehicle includes a vehicle seat 1 according to any one of the above embodiments. The vehicle includes, but is not limited to, wheels, a steering wheel, a power system and other components. The vehicle may be fuel vehicle, an electric vehicle, a hybrid vehicle, or the like. The vehicle may be a car, an SUV, an MPV or another suitable vehicle.

Heretofore, the technical solutions of the invention have been described in conjunction with the preferred implementations shown in the drawings, however, those skilled in the art can readily understand that the scope of protection of the invention is obviously not limited to these specific implementations. Those skilled in the art could make equivalent changes or substitutions to the related technical features without departing from the principles of the invention, and all the technical solutions after the changes or the substitutions fall within the scope of protection of the invention.

## Claims

1. A vehicle seat, comprising:
a seat pan mounting bracket having opposite front and rear portions;
a seat pan having a fixed end rotatably fixed to the rear portion and a movable end opposite the fixed end;
a connecting bracket fixedly connected to the movable end and on which a locking part is provided; and
a locking mechanism arranged on the front portion and capable of forming a releasable locking connection with the locking part for constraining the movable end on the front portion.

2. The vehicle seat according to claim **1,** wherein the locking mechanism comprises:
a base frame arranged on the front portion and formed with a locking groove to receive the locking part; and
a bolt retractably fixed to the base frame, the bolt being configured to extend into the locking groove to lock the locking part and exit the locking groove to unlock the locking part.

3. The vehicle seat according to claim 2, wherein an elastic U-shaped limiter is provided on the base frame, and the U-shaped limiter defines the locking groove opening toward the locking part.

4. The vehicle seat according to claim 3, wherein
the base frame comprises a base plate, first and second side plates extending vertically upwardly from two sides of the base plate respectively, a first engaging opening formed in the first side plate, and a second engaging opening opposite the first engaging opening and formed in the second side plate; and
the U-shaped limiter comprises a limiter body and first and second engaging grooves extending vertically downwardly from two ends of the limiter body,
wherein each of the first engaging groove and the second engaging groove is insertable into a corresponding one of the first engaging opening and the second engaging opening.

5. The vehicle seat according to claim 4, wherein a first vertical wall and a second vertical wall that are on one side of the U-shaped limiter and spaced apart from each other are formed on the base plate, a first limiting hole is formed in the first vertical wall, a second limiting hole opposite the first limiting hole is formed in the second vertical wall, and the bolt is retractably fixed in the first limiting hole and the second limiting hole.

6. The vehicle seat according to claim 5, wherein the bolt comprises a locking section, a connecting section and a limiting section that are connected in sequence, the connecting section extending through the second limiting hole, the locking section being positioned on a side of the second vertical wall close to the first vertical wall and capable of extending through the first limiting hole to enter or exit the locking groove, and the limiting section being positioned on a side of the second vertical wall away from the first vertical wall,
wherein the locking section and the limiting section have first and second limiting surfaces opposite each other, respectively, and an area on each of the first limiting surface and the second limiting surface is larger than an area of the second limiting hole.

7. The vehicle seat according to claim 6, wherein a return spring is sleeved on the connecting section, the return spring having a first end fixed to the locking section and a second end fixed to the second vertical wall.

8. The vehicle seat according to claim 6, wherein a third vertical wall facing toward the second vertical wall and remote from the first vertical wall is further provided on the base plate, a handle is provided on the third vertical wall, and a connector is provided between the handle and the limiting section, such that the bolt is controlled to exit the locking groove by gripping the handle and exerting an external force on the handle.

9. The vehicle seat according to claim 2, wherein the locking part includes a horizontal section that is capable of abutting within the locking groove, vertical sections extending vertically upwardly from two ends of the horizontal section, and diagonal sections respectively extending outwardly from ends of the vertical sections away from the horizontal section and capable of being fixed to the connecting bracket.

10. The vehicle seat according to claim 1, wherein a first rotating shaft and a second rotating shaft opposite and coaxial with each other are provided on the rear portion, and a first bearing that is capable of receiving the first rotating shaft and a second bearing that is capable of receiving the second rotating shaft are provided on the fixed end,
wherein the first bearing and the second bearing each have a U-shaped groove opening rearwards.

11. The vehicle seat according to claim 1, wherein the fixed end is detachably fixed to the rear portion.

12. The vehicle seat according to any one of claims 1 to 11, wherein the vehicle seat further comprises a leg rest, the leg rest being fixedly connected to the seat pan by virtue of the connecting bracket.

13. A vehicle, comprising a vehicle seat according to any one of claims 1 to 12.
